# EUROPÄISCHE PATENTSCHRIFT

(11) **EP 2 710 073 B1**
(45) Veröffentlichungstag und Bekanntmachung des Hinweises auf die Patenterteilung: **15.07.2015**
(21) Anmeldenummer: 12716354.1
(22) Anmeldetag: 17.04.2012
(51) Int. Cl.: C08L 33/06, C08L 101/00

(54) **POLY(METH)ACRYLATE ALS MULTIFUNKTIONALES ADDITIV IN KUNSTSTOFFEN**
POLY(METH)ACRYLATE AS MULTIFUNCTIONAL ADDITIVE IN PLASTICS
POLY(METH)ACRYLATE EN TANT QU'ADDITIF MULTIFONCTIONNEL DANS DES MATIÈRES PLASTIQUES

(30) Priorität: 19.05.2011 DE 102011076115
(43) Veröffentlichungstag der Anmeldung: 26.03.2014
(73) Patentinhaber: Evonik Oil Additives GmbH, 64293 Darmstadt (DE)
(72) Erfinder: KAUTZ, Holger, 2930 Brasschaat (BE); BRAUN, Harald, 2200 Herentals (BE); GHAHARY, Reza, 64289 Darmstadt (DE)
(86) Internationale Anmeldenummer: PCT/EP2012/056994
(87) Internationale Veröffentlichungsnummer: WO 2012/156165

(56) Entgegenhaltungen:
- EP-A1- 0 418 661
- EP-A2- 0 342 497
- EP-A2- 0 667 390
- FR-A- 1 579 871

## Beschreibung

### Gebiet der Erfindung

Viele thermoplastische Kunststoffe, insbesondere Polyvinylchlorid (PVC), verfügen über nicht optimale mechanische Eigenschaften und müssen additiviert werden. So werden PMMA oder PVC häufig mit Schlagzäh-Modifiern zur Verbesserung der Schlagzähigkeit additiviert. Ein weiterer Aspekt ist die Gleitwirkung eines Kunststoffes. Hier besteht bei vielen Thermoplasten der Bedarf an einer verbesserten Additivierung, die zu einer einfacheren Extrudierbarkeit, bzw. Verarbeitbarkeit und zu besseren mechanischen Eigenschaften führen. Eine Verbesserung der Gleiteigenschaften führt zum Beispiel zu einem verzögerten Schmelzen eines Thermoplasten bei der Extrusion und somit zu einer günstigeren Fluidität und einem Absenken des erforderlichen Verarbeitungsdrucks. Darüber hinaus erleichtert eine bessere Gleitwirkung die Verarbeitung in Formgebungsmaschinen dadurch, dass eine geringere Metallhaftung bewirkt wird. Dies gilt insbesondere für das an sich spröde und aufgrund der geringen Schmelzviskosität schwer extrudierbare PVC. In vorliegender Erfindung wird zur Verbesserung dieser technischen Aspekte ein neues einkomponentiges Additiv auf Poly(meth)acrylat-Basis für thermoplastische Kunststoffe, insbesondere für PVC, zur Verfügung gestellt. Dieses zeichnet sich durch ein Poly(meth)acrylat-Backbone und lange Alkyl-Seitenketten aus.

### Stand der Technik

In der EP 0 132 317 wird ein (Meth)acrylatcopolymer aus MMA, einem Alkylacrylat mit C₁-C₄-Resten und Alkylacrylaten mit C₁-C₈-Resten offenbart. Diese Polymere verbessern zwar die Gleitwirkung, aufgrund des hohen Acrylatanteils wird die Verarbeitung an metallischen Oberflächen jedoch kaum positiv beeinflusst.

In der EP 0 779 336 ist ein Gleitmittel für thermoplastische Harze offenbart, das aus zwei Polymeren A (mindestens 50 Gew%) und B (mindestens 0,1 Gew%) zusammengesetzt ist. Polymer A besteht dabei zu mindestens 50 Gew%, in der Regel jedoch zu 100 Gew% aus (Meth)acrylat-Monomeren mit einem C₁₂-C₂₄-Rest. Polymer B besteht ausschließlich aus C₁-C₄-(Meth)acrylaten und weist eine Glasübergangstemperatur von mindestens 15 °C auf. Nachteil dieses Gleitmittels ist, dass es nur als zweikomponentiges System verwendbar ist und Polymer A zur Verblockung neigt. Darüber hinaus ist es nur sehr schwierig zu gewährleisten, dass beide Komponenten des Gleitmittels eine ausreichende Verträglichkeit zur Matrix des Thermoplasten aufweist und es nicht zu einer, die mechanischen Eigenschaften negativ beeinflussenden, Mikrophasenseparation kommt. Eine solche Unverträglichkeit kann darüber hinaus auftreten, wenn der Thermoplast zusätzlich additivert ist, z.B. mit Flammschutzmitteln, stark gefüllt ist, z.B. mit mineralischen Füllstoffen, oder faserverstärkt ist, z. B. mit Glas- oder Carbonfasern.

### Aufgabe

Aufgabe der vorliegenden Erfindung war es, ein Additiv, insbesondere ein Gleitmittel für Thermoplasten, insbesondere für PVC, zur Verfügung zu stellen, das eine gute Verträglichkeit mit dem Thermoplasten sowie den in der Kunststoffverarbeitung üblichen Additiven oder Zuschlagstoffen, wie beispielsweise Glasfasern, Carbonfasern, mineralischen Füllstoffen oder Flammschutzmitteln, aufweist und als eine.Komponente dem Thermoplasten zugegeben werden kann.

Darüber hinaus war es Aufgabe, ein Additiv zur Verfügung zu stellen, das bei der Verarbeitung des Thermoplasten einen geringeren Energieaufwand und/oder geringere Zykluszeiten benötigt, insbesondere eine Absenkung der Verarbeitungstemperaturen, wie z.B. der Werkzeugtemperatur im Spritzguss, ermöglicht. Gleichzeitig soll der Massedruck bzw. die Massetemperatur in der Extrusion absenkt werden.

Insbesondere war es Aufgabe der vorliegenden Erfindung, dass die Additive eine hohe Wirksamkeit aufweisen sollen. D.h. die Fließfähigkeit der betreffenden Kunststoffschmelze soll schon bei geringer Zugabemenge deutlich erhöht werden.

Weiterhin war es Aufgabe, durch die Additivierung mit dem Additiv die mechanischen Eigenschaften, wie z.B. die (Kerb-)Schlagzähigkeit, des Thermoplasten gegenüber üblichen, ohne oder mit Additiven des Standes der Technik hergestellten Thermoplasten nicht zu beeinträchtigen, oder sogar zu verbessern. Gleichzeitig soll eine hohe Wärmeformbeständigkeit der hochfließfähigen Formmassen gewährleistet sein.

Weiterhin soll der Thermoplast eine gute Witterungsbeständigkeit, einen hohen UV-Schutz, eine gute Beständigkeit gegenüber Lösungsmitteln oder anderen Chemikalien, sowie eine hohe Oberflächengüte bzw. einen erhöhten Oberflächenglanz, auch bei hohem Füllgrad, aufweisen.

### Lösung

Gelöst wurden die Aufgaben durch Bereitstellung neuartiger Thermoplasten, enthaltend neuartige Additive, insbesondere enthaltend ein neuartiges Gleitmittel, welches mit einer Konzentration zwischen 0,01 Gew% und 20 Gew%, bevorzugt zwischen 0,05 Gew% und 15 Gew% in dem Thermoplasten enthalten ist. Bei diesem Additiv zur Additivierung der Thermoplasten handelt es sich um ein Poly(meth)acrylat. Dieses Poly(meth)acrylat weist 10 bis 100 Gew% mindestens eines (Meth)acrylats mit Alkylresten, die aus 9 bis 40, bevorzugt 9 bis 30 Kohlenstoffatomen bestehen als Bestandteile auf.

Dieses Poly(meth)acrylat zeichnet sich insbesondere in einer ersten bevorzugten Ausführungsform durch eine Zusammensetzung aus, die folgende Bestandteile aufweist:
a) 10 bis 90 Gew% mindestens eines (Meth)acrylats mit Alkylresten, die aus 8 bis 40 Kohlenstoffatomen bestehen, und
b) 10 bis 50 Gew%, bevorzugt 15 bis 40 Gew% mindestens eines α-Olefins mit Alkylresten, die aus 4 bis 14 Kohlenstoffatomen bestehen.

Dabei setzen sich die (Meth)acrylate a), die Aklylreste, die aus 8 bis 40 Kohlenstoffatomen bestehen, aufweisen, bevorzugt aus a1) 10 bis 60 Gew%, bevorzugt 20 bis 50 Gew% mindestens eines (Meth)acrylats mit Alkylresten, die aus 8 bis 12 Kohlenstoffatomen bestehen, und a2) 10 bis 60 Gew%, bevorzugt 30 bis 50 Gew% mindestens eines (Meth)acrylats mit Alkylresten, die aus 12 bis 40, bevorzugt 12 bis 30 Kohlenstoffatomen bestehen, zusammen. Dabei können die Monomere a1) und a2) beide jeweils aus genau einer Spezies oder aus Mischungen verschiedener Spezies, zusammengesetzt aus Acrylaten und/oder Methacrylaten, die wiederum verschiedene Reste mit den oben angegebenen Zahlen Kohlenstoffatomen aufweisen.

Die Formulierung 8 bis 12 Kohlenstoffatome beschreibt in diesem Fall einen Kohlenstoffrest, der auf einen entsprechenden Alkohol rückführbar, welcher anschließend wiederum mit (Meth)acrylsäure verestert wurde. Die Reste können linear, verzweigt oder sogar teilweise cyclisch sein. Bei dem Zahlenwert muss es sich nicht zwangsläufig um eine ganze Zahl handeln. Bei einer Mischung von Wiederholungseinheiten mit verschiedenen Resten mit 8 bis 12 Kohlenstoffatomen wird ein entsprechender Durchschnittswert gebildet. Die Grenzen für diesen Durchschnittswert sind entsprechend 8,0 und 12,0.

Analoges gilt für die Wiederholungseinheiten a2) mit Alkylresten, die zwischen 12 und 40 Kohlenstoffatome aufweisen. Für den Durchschnittswert der Wiederholungseinheiten a2) sind die Grenzwerte entsprechend 12,0 als untere und 40,0 als obere Grenze. Wiederholungseinheiten mit genau 12 Kohlenstoffatomen, wie z.B. Dodecyl(meth)acrylat können dabei sowohl Bestandteil der Zusammensetzung a1) als auch a2) sein.

Das Additiv einer zweiten bevorzugten Ausführungsform zeichnet sich dadurch aus, dass es sich bei dem Additiv um ein Poly(meth)acrylat handelt, und dass dieses Poly(meth)acrylat 10 bis 100 Gew% mindestens einer Wiederholungseinheit, gebildet aus (Meth)acrylaten a3) mit Alkylresten, die aus 9 bis 20, bevorzugt 10 bis 16 Kohlenstoffatomen bestehen, wobei 10 bis 80 Gew%, bevorzugt 20 bis 65 Gew% der Alkylreste verzweigt sind, aufweist. Ein Alkylrest ist als verzeigt anzusehen, wenn dieser mindestens ein tertiäres Kohlenstoffatom aufweist.

In einer besonders bevorzugten Ausführungsform handelt es sich dabei um ein Poly(meth)acrylat, das zu 100 Gew% aus den verzweigten Wiederholungseinheiten a3), und das ein Molekulargewicht zwischen 5 000 und 15 000 aufweist.

Zusätzlich zu den Wiederholungseinheiten a) und b) der ersten Ausführungsform bzw. der teilweise verzweigten Wiederholungseinheiten a) der zweiten Ausführungsform kann das Gleitmittel bis zu 20,0 Gew%, bevorzugt zwischen 0,1 und 20,0 Gew%, besonders bevorzugt 1 bis 15 Gew% eines oder mehrerer Acrylate (c), die einen aus 1 bis 7 Kohlenstoffatomen bestehenden Alkylrest aufweisen, enthalten. Beispiele zur Darstellung von Wiederholungseinheiten c) sind Ethyl-, Propyl- oder Butylacrylat.

Weiterhin kann das Additiv bis zu 20,0 Gew%, bevorzugt zwischen 0,1 und 20,0 Gew%, besonders bevorzugt 1 bis 15 Gew% eines oder mehrerer Methacrylate d), die einen aus 1 bis 7 Kohlenstoffatomen bestehenden Alkylrest aufweisen, enthalten. Beispiele zur Darstellung von Wiederholungseinheiten d) sind Hexylmethacrylat oder Heptylmethacrylat.

Ein theoretisches Homopolymer, zusammengesetzt aus diesen (Meth)acrylaten c) und/oder d), würde eine Glasübergangstemperatur kleiner 0 °C aufweisen. Bevorzugt würde jedes einzelne Homopolymer zusammengesetzt aus einem dieser (Meth)acrylate eine Glasübergangstemperatur kleiner 0 °C aufweisen.

Die im Kontext dieser Schrift verwendete Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Die Wiederholungseinheiten a1) mit Alkylresten, die aus 8 bis 12 Kohlenstoffatomen zusammengesetzt sind, werden durch Copolymerisation entsprechender Monomere erhalten. Beispiele für solche Monomere a1) sind 2-Ethylhexyl(meth)acrylat, 2-tert-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat oder Dodecyl(meth)acrylat.

Beispiele für die Monomere zur Darstellung der Wiederholungseinheiten a2) mit Alkylresten, die aus 12 bis 40 Kohlenstoffatomen bestehen, sind neben Dodecyl(meth)acrylat vor allem Monomere, die mittels Umsetzen von (Meth)acrylaten mit langkettigen Fettalkoholen erhalten werden. Dabei handelt es sich bei den Fettalkoholen im Allgemeinen um Mischungen von verschieden langkettigen Alkoholen. Zu diesen Fettalkoholen gehören unter anderem Oxo Alcohol^{®} 7911, Oxo Alcohol^{®} 7900, Oxo Alcohol^{®} 1100; Alfol^{®} 610, Alfol^{®} 810, Lial^{®} 125 und Nafol^{®}-Typen (Sasol); C13-C15-Alkohol (BASF); (Afton); Linevol^{®} 79, Linevol^{®} 911 und Neodol^{®} 25 (Shell); Dehydad^{®}-, Hydrenol^{®}- und Lorol^{®}-Typen (Cognis); Exxal^{®} 10 (Exxon Chemicals), ECOROL^{®} 8/98, ECOROL^{®} 12/98, ECOROL^{®} 14/98 und ECOROL^{®} 16/98 (Ecogreen Oleochemicals); PALMEROL^{®} 0898 NF, PALMEROL^{®} 1098 NF, PALMEROL^{®}0810 NF, PALMEROL^{®} 1299 NF und PALMEROL^{®} 1499 NF (KLK OLEO); Vegarol^{®} 8, Vegarol^{®} 10, Vegarol^{®} 12 und Vegarol^{®} 14 (Berg+Schmidt); Mascol^{®} 24; Isofol^{®} 24, Isofol^{®} 28, Isofol^{®} 32 (Sasol) oder Kalcol^{®} 2465 (Kao Chemicals). Diese Alkohole, die daraus hergestellten (Meth)acrylate und die daraus gewonnen Polymere sind in der Regel und bevorzugt flüssig. Insbesondere die flüssige Form der multifunktionalen Additive hat große Vorteile bei der Compoundierung und der Wirkung in der thermoplastischen Matrix.

Bei den verzweigten Wiederholungseinheiten a3) handelt es sich um (Meth)acrylate mit Alkylresten, die aus 9 bis 40 Kohlenstoffatomen bestehen, wobei 10 bis 80 Gew% der Alkylreste verzweigt sind. Verzweigt heißt in diesem Zusammenhang, dass der Rest mindestens ein tertiäres Kohlenstoffatom aufweist. Bei den Verzweigungsgruppen handelt es sich in der Regel um C₁- bis C₁₄-Reste, insbesondere um Methyl-, Ethyl- oder Propyl-Verzweigungen. Jedoch auch längere Verzweigungsgruppen und/oder Mischungen verschiedener Verzweigungen sind vorteilhaft. Die Verzweigung befindet sich ausgehend von der Estergruppe in der Regel am zweiten bis fünften Kohlenstoffatom des Restes.

Bei den α-Olefinen mit 4 bis 14 Kohlenstoffatomen kann es sich beispielsweise um 1-Buten, 1-Penten, 1-Hepten, 1-Octen, 1-Decen, 1-Dodecen oder Ethyl-hex-1-en handeln. Besonders bevorzugt sind 1-Decen oder 1-Dodecen.

Bevorzugt handelt es sich bei dem Additiv um ein Poly(meth)acrylat mit einer Glasübergangstemperatur zwischen -100 und 0 °C, bevorzugt zwischen -90 und -40 °C und besonders bevorzugt zwischen -80 und -60 °C. Die Glasübergangstemperaturen Tg werden dabei im Rahmen dieser Erfindung nach DIN EN ISO 11357-1 bestimmt.

Zudem weist das erfindungsgemäße Additiv bevorzugt ein mittleres Molekulargewicht (M_{w}) zwischen 5 000 und 75 000, bevorzugt zwischen 5 000 und 50 000 und besonders bevorzugt zwischen 8 000 und 40 000 auf. Die Molekulargewichte werden dabei im Rahmen dieser Erfindung mittels Gelpermeationschromatographie nach DIN EN ISO 11357-1 bestimmt.

Bevorzugt kann es sich bei dem erfindungsgemäßen Additiv um ein Schmiermittel, wie es zum Beispiel im Bereich Automotive eingesetzt wird, handeln. Das Schmiermittel weist bevorzugt eine kinematische Viskosität KV100 von mindestens 30 mm²/s, bevorzugt zwischen 30 und 700 mm²/s, besonders bevorzugt zwischen 200 und 600 mm²/S auf. Diese wird gemessen bei 100 °C gemäß ASTM D 445.

Die Polydisperistät der Additive liegt zwischen 1,1 und 4,0. Die Additive können neben der klassischen radikalischen Polymerisation auch mittels lebenden bzw. kontollierten radikalischen Polymerisationstechniken wie der NMP (Nitoxide Mediated Polymerization), RAFT (Reversible Addition Fragmentation chain Transfer polymerization) oder ATRP (Atom Transfer Radical Polymerization) hergestellt werden. In diesem Fall liegt die Polydispersität der erfindungsgemäßen Additive zwischen 1,1 und 2,5, bevorzugt zwischen 1,5 und 1,8.

Im Falle der bevorzugten freiradikalischen Polymerisation kann diese mit dem Fachmann bekannten Peroxiden, wie z.B. Dilauroylperoxid oder Dibenzoylperoxid, oder Azoinitiatoren, wie z.B. 2,2'-Azobisisobutyronitril, gestartet werden. Dabei können auch Mischungen verschiedener Initiatoren eingesetzt werden. Die Initiierung kann auch in mehreren Schritten und/oder durch Zudosieren des Initiators erfolgen. Eine ausführliche Beschreibung zur Herstellung ähnlicher Polymere, die sich auf die Herstellung der erfindungsgemäßen Additive übertragen lässt, findet sich beispielsweise in der dt. Patentanmeldung DE 10 2010 028 195.6.

Die Polymerisation kann mit oder ohne Regler, wie z.B. Mercaptanen, erfolgen. Bevorzugt werden bei Additiven der ersten bevorzugten Ausführungsform keine Regler verwendet. Bei Additiven der zweiten bevorzugten Ausführungsform werden dagegen 1,0 bis 7,0 Gew%, bevorzugt 2,0 bis 4,5 Gew% eines Reglers eingesetzt.

Bei dem mit einem erfindungsgemäßen Additiv additivierten Thermoplasten kann es sich um jeden bekannten technischen Thermoplasten, wie zum Beispiel um PE, HDPE, LLDPE, UMWHDPE, PP, einen APAO, einen EPDM, einen EPM, PPSU, ABS, ein Polyamid, PTFE, PS, PC, PEEK, PET, PPT oder PMMA handeln. Insbesondere handelt es sich bei dem Thermoplasten um Polyvinylchlorid.

Darüber hinaus kann das Additiv, z.B. zur Verwendung als Gleitmittel, vor dem Zusatz zu dem Thermoplasten weiter vorformuliert sein. Dazu kann das Additiv beispielsweise zusätzlich 0,1 bis 10 Gew% Polymerisationshilfsstoffe und/oder Additive aufweist. Weiterhin kann das Additiv in einem Masterbatch zusammen mit Schlagzähmodifiern, Pigmenten, Färbungsmitteln, Stabilisatoren, wie z.B. UV-Stabilisatoren oder Antioxidationsmittel, Haftvermittlern, Kompatibilisierern oder Weichmachern vorformuliert sein.

In einer besonderen Ausführungsform wird das Additiv - optional zusammen mit weiteren Komponenten - gemischt mit einem Teil des Thermoplasten als Masterbatch mit dem Thermoplasten verarbeitet. Da das Additiv an sich flüssig ist, hat ein solcher fester Masterbatch bei der späteren Dosierung, z.B. in einen Extruder, große Vorteile gegenüber der direkten Zugabe des Additivs.

Darüber hinaus kann der Thermoplast Füllstoffe, Carbonfasern, Glasfasern und/oder weitere Additive enthalten. In der Regel können solche Thermoplasten in Summe bis zu 60 Gew% Füllstoffe, Carbonfasern, Glasfasern und/oder weitere Additive enthalten.

Die Zugabe des Additivs zu dem Thermoplasten erfolgt in der Regel mittels eines Extruders. Dabei kann die Formulierung im Extruder mit anderen Arbeitsschritten, wie dem Mischen mit weiteren Thermoplasten, weitere Additivierungen, bis hin zur Formgebung am Ende der Extrusion, kombiniert werden.

Überraschend weisen Thermoplaste, enthaltend die erfindungsgemäßen Additive, gegenüber dem Stand der Technik eine Vielzahl von Vorteilen auf:
- Die Additive sind einfach und kostengünstig herzustellen.
- Die Extrusion oder ein nachfolgender Spritzguss der erfindungsgemäß additivierten Thermoplaste kann bei geringeren Temperaturen erfolgen.
- Die Additive zeigen eine hohe Verträglichkeit zu einer Vielzahl Thermoplasten.
- Die Additive zeigen insbesondere eine hohe Verträglichkeit zu PVC. Damit einhergehend lassen sich entsprechend additivierte Folien z.B. besser kalandrieren.
- Die Kerbschlagzähigkeit des PVC ist im Vergleich zu mit Gleitmitteln nach Stand der Technik additiviertem PVC zumindest vergleichbar.
- Die Wärmeformbeständigkeit ist in Bezug auf ein additviertem PVC im Vergleich zum Stand der Technik besser.
- Die Witterungs-, UV- und Chemikalienbeständigkeit der Thermoplasten wird durch das erfindungsgemäße Additiv nicht negativ beeinflusst.
- Schon bei geringen Zuschlagsmengen von unter 10 Gew% kann eine deutliche Verringerung der Schmelzviskosität erfolgen.
- Die Additive zeigen eine hohe Verträglichkeit zu einer Reihe von Zuschlagsstoffen wie Glasfasern, Carbonfasern oder mineralischen Füllstoffen.
- Die Ausstoßleistung bei der Extrusion wird deutlich erhöht.
- Die Ausformung der Profilgeometrien des Thermoplasten wird verbessert.
- Das Plate-out der Gesamtrezeptur kann deutlich verringert werden. Bei dem Plate-out handelt es sich um Ablagerungen im Extruder oder im Werkzeug, die zu Stippen, Verfärbungen und Oberflächendefekten des Produktes führen.
- Dadurch können die nötigen Reinigungen seltener durchgeführt und damit die Stillstandzeiten verkürzt werden.
- Die Maßhaltigkeit insbesondere dünner Stege und damit die Stabilität z.B. von Fensterprofilen konnte verbessert werden. Damit sind dünne Stege reißfester und Profile langlebiger.

Das Additiv kann mittels etablierten Polymerisationsmethoden bzw. -techniken hergestellt werden. In der Regel wird das Gleitmittel über kontinuierliche, semikontinuierliche oder batchweise Substanzpolymerisation oder über Lösungspolymerisation hergestellt. Bei einer Lösungspolymerisation wird das Lösungsmittel nach erfolgter Synthese entfernt und kann bevorzugt in einem nachfolgenden Herstellverfahren wiederverwendet werden.

Additive der ersten bevorzugten Ausführungsform werden bevorzugt mittels Substanzpolymerisation, die der zweiten bevorzugten Ausführungsform mittels oben beschriebener Lösungspolymerisation hergestellt.

In der Regel werden dem Thermoplast 0,05 bis 10,0 Gew% des erfindungsgemäßen Additivs zugesetzt. Der somit additiverte Thermoplast an sich ist gleichzeitig Teil der vorliegenden Erfindung. Insbesondere sind Thermoplasten Teil der vorliegenden Erfindung, die das beschriebene Additiv als einziges Gleitmittel aufweisen.

### Beispiele

### Messmethoden

Das Gewichtsgemittelte Molekulargewicht Mw sowie der Polydispersitatsindex PDI der Polymeren wurden mittels GPC bestimmt. Die Messungen erfolgten in THF bei 35°C gegen einen PMMA-Standart aus einem Satz von ≥25 Standards (Polymer Standards Service bzw. Polymer Laboratories), deren Mpeak logarhythmetisch gleichmäßig über den Bereich von 5 · 106 bis 2 · 102 g/mol verteilt lag. Es wurde eine Kombination aus sechs Säulen (Polymer Standards Service SDV 100A / 2x SDV LXL / 2× SDV 100A / Shodex KF-800D) verwendet. Zur Signalaufnahme wurde ein RI-Detektor (Agilent 1100 Series) eingesetzt.

Die Farbdifferenz wurde nach DIN 6174 mit einem Data Color Spectraflash SF 405 mit diffuser Beleuchtung durch Photometerkugel und Messung unter 8° bestimmt. Als Lichtart wurde natürliches Tageslicht (D65) eingestellt. Ausgabe erfolgte in Cie Lab. Aufgelistet in den entsprechenden Tabellen finden sich die insbesondere für PVC bedeutenden b-Werte. Weitere Werte (L- oder a-Wete, sowie Farbabstände) liegen vor, sind der Übersicht halber jedoch nicht abgedruckt. Auffälligkeiten gibt es bei diesen Werten zwischen erfindungsgemäßen Beispielen und Vergleichsbeispielen nicht. Die b-Werte des Lab-Farbraums geben die für PVC insbesondere relevante Gelbfärbung am besten wieder

Die Glanzmessungen erfolgten gemäß DIN 67530 60 Grad. Dabei wurde ein Glanzmessgerät LMG Refo 3 verwendet. Die Messung erfolgte an Probenkörpern mit glatter Oberfläche an 10 verschiedenen Stellen. Aufgelistet sind die Mittelwerte aus den bestimmten Minimal- und Maximalwerten. Bei Differenzen zwischen diesen beiden Werten größer 4,0 erfolgte keine Auswertung.

### Verwendete Rohstoffe

Bei Vinnolit S 3268 und Solvin 267 RC handelt es sich jeweils um handelsübliche PVC-Rohgranulate.

Bei Omya 95 T, Precarb 400 und Hydrocarb 95 T handelt es sich jeweils um CaCO₃-Füllstoffe.

Bei Tiona RCL 168 und Kronos 2220 handelt es sich jeweils um TiO₂-Pigmente.

Bei DEGALAN 10 F und DEGALAN 75 F handelt es sich jeweils um handelsübliche Verarbeitungshilfsmittel für PVC.

Bei DEGALAN EST 7 D und Paraloid KM 370 handelt es sich jeweils um handelsübliche Schlagzähmodifizierungsmittel für PVC.

Bei Baeropan TX 9600 FP 4 handelt es sich um einen handelsüblichen Ca/Zn-Stabilisator für PVC. Hierbei handelt es sich um einen PVC Hitzestabilisator One-Pack der negen stabilisierenden Komponeten auch Gleitmittel und Verarbeitungshilfsmittel enthält.

### Monomere

Die Anteile an linearen und verzweigten Resten wurde mittel Gaschromatographie (GC), sowie ¹³C- und ¹H-NMR bestimmt.

C₁₂₋₁₅-MA: Alkylmethacrylat, das 12 bis 15 C-Atome im Alkylrest aufweist, wobei der Alkylrest eine Mischung mit verzweigten und linearen Resten ist:
Anteil C₁₂ verzweigt: ca. 12 Gew% und C₁₂ linear: ca. 11,3 Gew %;
Anteil C₁₃ verzweigt: ca. 17,3 Gew% und C₁₃ linear: ca. 13,5 Gew%;
Anteil C₁₄ verzweigt: ca. 15,7 Gew% und C₁₄ linear: ca. 11,9 Gew%;
Anteil C₁₅ verzweigt: ca. 9,8 Gew% und C₁₅ linear: ca. 6,2 Gew%;

Anteil Methyl-Verzweigung ca. 14%, Anteil Ethyl-Verzweigung ca. 10%, Anteil Propyl-Verzweigung ca. 10%, Anteil an langerkettigen Verzweigungen ca. 17%, bezogen auf die Summe an linearen und verzweigten Resten

C_{9-10,3}-MA: Alkylmethacrylat, das etwa 10 C-Atome im Alkylrest aufweist, wobei der der Alkylrest eine Mischung mit vorwiegend verzweigten Resten darstellt:
Anteil an verzweigten Resten ca. 98 Gew%;
Anteil C₁₀ ca. 89,9 Gew%;
Anteil C₁₁ ca. 4,6 Gew%

### 1-Decen

### Vorstufen 1-3 (VS1-3)

Die in den Beispielen als Additiv verwendeten Polymere wurden nach folgender allgemeinen Herstellvorschrift hergestellt.

In einem 1 Liter 4-Halsrundkolben, ausgestattet mit einem KPG-Ruhrer (150 Umdrehungen pro Minute), Thermometer und Rückflusskühler wurde 1-Decen vorgelegt (Gesamtmenge aller Monomere: 760,0 g; genaue Zusammensetzung der Monomermischung: siehe Tabelle 1) und auf 140 °C erhitzt. Danach wurde mit der Zudosierung der übrigen Monomere und des Initiators begonnen. Als Initiator wurden 4,94 g tert-Butylper-2-ethylhexanoat (gelöst in 22 g Nexbase 3020) innerhalb von 11 Stunden kontinuierlich zudosiert. Die gleichzeitig begonnene kontinuierliche Zudosierung der übrigen Monomere erfolgte über einen Zeitraum von 7 Stunden (VS3: 5 h). Die Gesamtreaktionszeit betrug 12 Stunden. Abschließend wurden volatile Bestandteile bei einer Temperatur von 170 °C im Vakuum entfernt.

**Tabelle 1**

| Beispiel | C₁₂₋₁₅-MA [Gew%] | C_{9-10,3}-MA [Gew%] | 1-Decen [Gew%] | M_{w} [g/mol] |
|---|---|---|---|---|
| VS1 | 38,8 | 31,6 | 29,6 | 10 000 |
| VS2 | 43,0 | 35,0 | 22,0 | 15 000 |
| VS3 | 43,0 | 35,0 | 22,0 | 20 000 |

### Beispiele 1-6 (B1-6) und Vergleichsbeispiel 1 (VB1)

B1-6 und VB1 wurden auf einem Krauss Maffei KMDL 25 Zweischneckenextruder mit einer Schneckendrehzal von 30 min⁻¹, einer Dosierschneckendrehzal von 20 min⁻¹, einer Vortemperierungstemperatur von 170 °C, einer Einlauftemperatur von 190 °C und einer konstanten Werkzeugtemperatur (2 Messpunkte) von 195 °C durchgeführt. Dabei wurden im vorderen bereich Zylindertemperaturen von 185 °C und im hinteren Bereich von 190 °C eingestellt. Es wurde mit einem Füllgrad von 100% gefahren.

Die jeweiligen Zusammensetzungen finden sich in Tabelle 2. Versuchsergebnisse bzw. variable Extruderparameter finden sich dazu in Tabelle 3. Die Massedrücke 1 bis 3 wurden direkt nach der Zudosierung (1), in der Mitte des Extruders (2) und kurz vor dem Abzug (3) zusammen mit der Massetemperatur gemessen.

**Tabelle 2**

| | B1 | B2 | B3 | B4 | B5 | B6 | VB1 |
|---|---|---|---|---|---|---|---|
| Vinolit S 3268 | 6 000 g | | | | | | |
| Omya 95 T | 300 g | | | | | | |
| Tiona RCL 168 | 240 g | | | | | | |
| DEGALAN 10 F | 60 g | | | | | | |
| DEGALAN EST 7 D | 360 g | | | | | | |
| Beropan TX 9600 FP 4 | 204 g | | | | | | |
| Vorstufe 1 | 6,0 g | - | - | 18,0 g | - | - | - |
| Vorstufe 2 | - | 6,0 g | - | - | 18,0 g | - | - |
| Vorstufe 3 | - | - | 6,0 g | - | - | 18,0 g | - |

**Tabelle 3**

| | B1 | B2 | B3 | B4 | B5 | B6 | VB1 |
|---|---|---|---|---|---|---|---|
| Drehmoment | 41% | 39% | 38% | 36% | 34% | 34% | 45% |
| Massedruck 1 [bar] | 21 | 20 | 20 | 15 | 13 | 14 | 25 |
| Massedruck 2 [bar] | 34 | 37 | 37 | 35 | 35 | 36 | 36 |
| Massedruck 3 [bar] | 145 | 143 | 142 | 134 | 135 | 137 | 147 |
| Massetemperatur [°C] | 194 | 194 | 194 | 193 | 193 | 193 | 194 |
| Spezifische Energie [kW / kg] | 0,106 | 0,104 | 0,104 | 0,098 | 0,092 | 0,092 | 0,113 |
| b-Werte | 8,62 | 8,04 | 5,33 | 6,47 | 5,98 | 5,99 | 9,05 |
| Glanz (Oberseite) | 48,5 | 46,0 | 47,2 | 67,1 | 60,6 | 59,4 | 47,5 |
| Glanz (Unterseite) | 37,9 | 41,2 | 39,1 | 56,0 | 44,1 | 53,4 | 39,6 |

Aus den Beispielen 1-3 mit nur geringer Konzentration des erfindungsgemäßen Additivs von 0,08 Gew% erkennt man bereits, dass bei der Extrusion eine geringere Energie aufgewendet werden muss und der Massedruck bei der Extrusion merklich reduziert werden kann. Auch die Gelbwerte sind bereits gegenüber dem Stand der Technik verbessert.

Bei einer höheren Konzentration des Additivs von ca. 0,25 Gew% (Beispiele 4-6) können diese Ergebnisse zusätzlich gesteigert werden. Dies gilt insbesondere für die Gelbwerte und den Massedruck im Anfangsbereich des Extruders. Auch können hier zusätzlich die Glanzwerte verbessert werden. So dass man im Ganzen ein PVC mit einer höheren Oberflächengüte und verbesserten Erscheinungsbild erhält.

### Beispiele 7-8 (B7-8) und Vergleichsbeispiele 2 und 3 (VB2-3)

B7-8 und VB2-3 wurden auf einem Weber 11-25 gegenläufigen Zweischneckenextruder mit einem angeschlossenen Werkzeug zur Formung von Fensterprofilen (Fa. Greiner) eingesetzt. Die Schneckendrehzahl wurde hier mit 40 Umdrehungen/min eingestellt. Es wurde mit einem Füllgrad von 100% gefahren. Das Temperaturprofil mit 5 Heizzonen zeigt ausgehend von der Zudosierung zur Düse ein von 160°C auf 190°C ansteigende Temperatur mit einer Werkzeugtemperatur von 190 °C.

Die jeweiligen Zusammensetzungen finden sich in Tabelle 4. Versuchsergebnisse bzw. variable Extruderparameter finden sich dazu in Tabelle 5. Die Massedrücke 1 bis 3 wurden nach einer Extruderstrecke, die dem 9fachen (1), 14fachen (2) und 20fachen (3) Durchmesser (D9, D14 und D20) des Extruders entsprechen gemessen. Massedruck 4 entspricht dem Druck kurz vor und Massedruck 5 kurz hinter der Düse.

**Tabelle 4**

| | B7 | B8 | B9 | B10 | B11 | B12 | VB2 |
|---|---|---|---|---|---|---|---|
| Solvin 267 RC | 9450 g | | | | | | |
| Paraloid KM 370 | 550 g | | | | | | |
| Precarb 400 | 700 g | | | | | | |
| Hydrocarb 95 T | 300 g | | | | | | |
| Kronos 2220 | 330 g | | | | | | |
| CaZn-Stabilisator | 367 g | | | | | | |
| Vorstufe 1 | 15,0 g | 30,0 g | - | - | - | - | - |
| Vorstufe 2 | - | - | 15,0 g | 30,0 g | - | - | - |
| Vorstufe 3 | - | - | - | - | 15,0 g | 30,0 g | - |

**Tabelle 5**

| | B7 | B8 | B9 | B10 | B11 | B12 | VB2 |
|---|---|---|---|---|---|---|---|
| Massedruck 1 [bar] | 155 | 142 | 171 | 156 | 178 | 156 | 172 |
| Massedruck 2 [bar] | 254 | 221 | 274 | 240 | 285 | 246 | 302 |
| Massedruck 3 [bar] | 445 | 373 | 463 | 386 | 463 | 392 | 503 |
| Massedruck 4 [bar] | 277 | 233 | 286 | 241 | 287 | 245 | 310 |
| Massedruck 5 [bar] | 101 | 86 | 104 | 89 | 105 | 91 | 112 |
| Output [kg/h] | 1,30 | 1,39 | 1,32 | 1,43 | 1,33 | 1,45 | 1,10 |
| Motorbelastung [Nm] | 50,68 | 44,24 | 52,05 | 45,70 | 52,54 | 46,19 | 58,01 |
| b-Werte | 5,48 | 4,93 | 5,42 | 4,75 | 5,34 | 4,76 | 6,35 |

Auch bei diesen Versuchen mit einem Einschneckenextruder findet die Extrusion bei geringeren Drücken bzw. geringerer Motorbelastung statt. Auch hier werden Produkte mit geringerer Gelbfärbung erhalten. Zusätzlich können die Ausbeuten gegenüber VB2 ohne Additiv um bis zu mehr als 20% gesteigert werden.

## Patentansprüche

1. Thermoplast, enthaltend zwischen 0,05 Gew% und 20 Gew% eines Additivs, **dadurch gekennzeichnet, dass** es sich bei dem Additiv um ein Poly(meth)acrylat handelt,
und dass dieses Poly(meth)acrylat 10 bis 100 Gew% mindestens eines (Meth)acrylats mit Alkylresten, die aus 9 bis 40 Kohlenstoffatomen bestehen, aufweist.

2. Thermoplast gemäß Anspruch 1, **dadurch gekennzeichnet, dass** dieses Poly(meth)acrylat
10 bis 90 Gew% mindestens eines (Meth)acrylats mit Alkylresten, die aus 9 bis 40 Kohlenstoffatomen bestehen, und
10 bis 50 Gew% mindestens eines α-Olefins mit Alkylresten, die aus 4 bis 14 Kohlenstoffatomen bestehen, aufweist.

3. Thermoplast gemäß Anspruch 2, **dadurch gekennzeichnet, dass** diese Poly(meth)acrylat
10 bis 60 Gew% mindestens eines (Meth)acrylats mit Alkylresten, die aus 9 bis 12 Kohlenstoffatomen bestehen,
10 bis 60 Gew% mindestens eines (Meth)acrylats mit Alkylresten, die aus 12 bis 40 Kohlenstoffatomen bestehen, wobei die Summe aller (Methacrylat)monomere mit Alkylresten, die aus 8 bis 40 Kohlenstoffatomen bestehen, maximal 90 Gew% beträgt, und
10 bis 50 Gew% mindestens eines α-Olefins mit Alkylresten, die aus 4 bis 14 Kohlenstoffatomen bestehen,
aufweist.

4. Thermoplast gemäß Anspruch 1, **dadurch gekennzeichnet, dass** es sich bei dem Additiv um ein Poly(meth)acrylat handelt,
dass dieses Poly(meth)acrylat 10 bis 100 Gew% mindestens eines (Meth)acrylats mit Alkylresten, die aus 9 bis 20 Kohlenstoffatomen bestehen, wobei 10 bis 80 Gew% der Alkylreste verzweigt sind, aufweist.

5. Thermoplast gemäß Anspruch 4, **dadurch gekennzeichnet, dass** das Poly(meth)acrylat zu 100 Gew% mindestens eines (Meth)acrylats mit Alkylresten, die aus 10 bis 16 Kohlenstoffatomen bestehen, wobei 10 bis 80 Gew% der Alkylreste verzweigt sind, aufweist, und dass das Poly(meth)acrylat ein Molekulargewicht zwischen 5 000 und 15 000 aufweist.

6. Thermoplast gemäß mindestens einem der Ansprüche 1 bis 3, **dadurch gekennzeichnet, dass** es sich bei dem Additiv um ein Poly(meth)acrylat mit einer Glasübergangstemperatur zwischen -100 und 0 °C handelt, und dass diese Poly(meth)acrylat
20 bis 50 Gew% mindestens eines (Meth)acrylats mit Alkylresten, die aus 8 bis 12 Kohlenstoffatomen bestehen,
30 bis 50 Gew% mindestens eines (Meth)acrylats mit Alkylresten, die aus 12 bis 40 Kohlenstoffatomen bestehen,
15 bis 40 Gew% mindestens eines α-Olefins mit Alkylresten, die aus 4 bis 14 Kohlenstoffatomen bestehen,
aufweist.

7. Thermoplast gemäß mindestens einem der Ansprüche 1 bis 4, **dadurch gekennzeichnet, dass** das Additiv ein mittleres Molekulargewicht (M_{w}) zwischen 5 000 und 75 000 aufweist.

8. Thermoplast gemäß Anspruch 7, **dadurch gekennzeichnet, dass** das Additiv ein mittleres Molekulargewicht (M_{w}) zwischen 8 000 und 40 000 aufweist.

9. Thermoplast gemäß mindestens einem der Ansprüche 1 bis 8, **dadurch gekennzeichnet, dass** es sich bei dem Additiv um ein Schmiermittel handelt, und dass das Schmiermittel eine kinematischen Viskosität KV100 von mindestens 30 mm²/s aufweist, gemessen bei 100 °C gemäß ASTM D 445.

10. Thermoplast gemäß mindestens einem der Ansprüche 1 bis 4, **dadurch gekennzeichnet, dass** das Additiv zusätzlich zwischen 0,1 und 20,0 Gew% eines oder mehrerer Acrylate enthält, die einen aus 1 bis 7 Kohlenstoffatomen bestehenden Alkylrest aufweisen und als Homopolymer jeweils eine Glasübergangstemperatur kleiner 0 °C aufweisen würden und/oder zusätzlich zwischen 0,1 und 20,0 Gew% eines oder mehrerer Methacrylate enthält, die einen aus 1 bis 7 Kohlenstoffatomen bestehenden Alkylrest aufweisen.

11. Thermoplast gemäß mindestens einem der Ansprüche 1 bis 10, **dadurch gekennzeichnet, dass** es sich bei dem Thermoplasten um Polyvinylchlorid handelt.

12. Thermoplast gemäß mindestens einem der Ansprüche 1 bis 11, **dadurch gekennzeichnet, dass** das Additiv zusätzlich 0,1 bis 10 Gew% Polymerisationshilfsstoffe und/oder Additive aufweist.

13. Thermoplast-gemäß mindestens einem der Ansprüche 1 bis 12, **dadurch gekennzeichnet, dass** der Thermoplast 0,05 bis 10 Gew% des Additivs aufweist.

14. Thermoplast gemäß Anspruch 13, **dadurch gekennzeichnet, dass** der Thermoplast nur das Additiv gemäß mindestens einem der Ansprüche 1 bis 12 aufweist.

15. Thermoplast gemäß Anspruch 13 oder 14, **dadurch gekennzeichnet, dass** der Thermoplat zusätzlich in Summe bis zu 60 Gew% Füllstoffe, Carbonfasern, Glasfasern und/oder weitere Additive enthält.

16. Verfahren zur Additiverung eines Thermoplasten, **dadurch gekennzeichnet, dass** 0,05 bis 10 Gew% eines Additivs gemäß mindestens einem der Ansprüche 1 bis 13 mit dem Thermoplasten in einem Extruder vermischt werden.

17. Verfahren gemäß Anspruch 16, **dadurch gekennzeichnet, dass** das Additiv dem Extruder in Form eines Masterbatches zugeführt wird.

## Claims

1. Thermoplastic, comprising from 0.05% by weight to 20% by weight of an additive, **characterized in that** the additive involves a poly(meth)acrylate,
and that the said poly (meth) acrylate comprises from 10 to 100% by weight of at least one (meth)acrylate having alkyl moieties which are composed of from 9 to 40 carbon atoms.

2. Thermoplastic according to Claim 1, **characterized in that** the said poly(meth)acrylate comprises
from 10 to 90% by weight of at least one (meth)acrylate having alkyl moieties which are composed of from 9 to 40 carbon atoms, and
from 10 to 50% by weight of at least one α-olefin having alkyl moieties which are composed of from 4 to 14 carbon atoms.

3. Thermoplastic according to Claim 2, **characterized in that** the said poly(meth)acrylate comprises
from 10 to 60% by weight of at least one (meth)acrylate having alkyl moieties which are composed of from 9 to 12 carbon atoms,
from 10 to 60% by weight of at least one (meth)acrylate having alkyl moieties which are composed of from 12 to 40 carbon atoms, where the entirety of all of the (meth)acrylate monomers having alkyl moieties which are composed of from 8 to 40 carbon atoms amounts to at most 90% by weight, and
from 10 to 50% by weight of at least one α-olefin having alkyl moieties which are composed of from 4 to 14 carbon atoms.

4. Thermoplastic according to Claim 1, **characterized in that** the additive involves a poly(meth)acrylate,
and that the said poly (meth) acrylate comprises from 10 to 100% by weight of at least one (meth)acrylate having alkyl moieties which are composed of from 9 to 20 carbon atoms, where from 10 to 80% by weight of the alkyl moieties are branched moieties.

5. Thermoplastic according to Claim 4, **characterized in that** the poly(meth)acrylate is composed of 100% by weight of at least one (meth)acrylate having alkyl moieties which are composed of from 10 to 16 carbon atoms, where from 10 to 80% by weight of the alkyl moieties are branched moieties, and that the molecular weight of the poly(meth)acrylate is from 5000 to 15 000.

6. Thermoplastic according to at least one of Claims 1 to 3, **characterized in that** the additive involves a poly(meth)acrylate with a glass transition temperature from -100 to 0 °C, and that the said poly (meth) acrylate comprises
from 20 to 50% by weight of at least one (meth)acrylate having alkyl moieties which are composed of from 8 to 12 carbon atoms,
from 30 to 50% by weight of at least one (meth)acrylate having alkyl moieties which are composed of from 12 to 40 carbon atoms, and
from 15 to 40% by weight of at least one α-olefin having alkyl moieties which are composed of from 4 to 14 carbon atoms.

7. Thermoplastic according to at least one of Claims 1 to 4, **characterized in that** the average molecular weight (M_{w}) of the additive is from 5000 to 75 000.

8. Thermoplastic according to Claim 7, **characterized in that** the average molecular weight (M_{w}) of the additive is from 8000 to 40 000.

9. Thermoplastic according to at least one of Claims 1 to 8, **characterized in that** the additive involves a lubricant and that the kinematic viscosity KV100 of the lubricant is at least 30 mm²/s, measured at 100°C in accordance with ASTM D 445.

10. Thermoplastic according to at least one of Claims 1 to 4, **characterized in that** the additive also comprises from 0.1 to 20.0% by weight of one or more acrylates which have an alkyl moiety composed of from 1 to 7 carbon atoms, where these would respectively have, as homopolymer, a glass transition temperature below 0°C, and/or also comprises from 0.1 to 20.0% by weight of one or more methacrylates which have an alkyl moiety composed of from 1 to 7 carbon atoms.

11. Thermoplastic according to at least one of Claims 1 to 10, **characterized in that** the thermoplastic involves polyvinyl chloride.

12. Thermoplastic according to at least one of Claims 1 to 11, **characterized in that** the additive also comprises from 0.1 to 10% by weight of polymerization auxiliaries and/or of additives.

13. Thermoplastic according to at least one of Claims 1 to 12, **characterized in that** the thermoplastic comprises from 0.05 to 10% by weight of the additive.

14. Thermoplastic according to Claim 13, **characterized in that** the thermoplastic comprises only the additive according to at least one of Claims 1 to 12.

15. Thermoplastic according to Claim 13 or 14, **characterized in that** the thermoplastic also comprises a total of up to 60% by weight of fillers, carbon fibres, glass fibres and/or other additives.

16. Process for additive addition to a thermoplastic, **characterized in that** from 0.05 to 10% by weight of an additive according to at least one of Claims 1 to 13 are mixed with the thermoplastic in an extruder.

17. Process according to Claim 16, **characterized in that** the additive is introduced in the form of a masterbatch into the extruder.

## Revendications

1. Thermoplastique, contenant entre 0,05 et 20% en poids d'un additif, **caractérisé en ce qu'**il s'agit, pour l'additif, d'un poly(méth)acrylate et que ce poly(méth)acrylate présente 10 à 100% en poids d'au moins un (méth)acrylate présentant des radicaux alkyle constitués par 9 à 40 atomes de carbone.

2. Thermoplastique selon la revendication 1, **caractérisé en ce que** ce poly(méth)acrylate présente
- 10 à 90% en poids d'au moins un (méth)acrylate présentant des radicaux alkyle constitués par 9 à 40 atomes de carbone, et
- 10 à 50% en poids d'au moins une α-oléfine présentant des radicaux alkyle constitués par 4 à 14 atomes de carbone.

3. Thermoplastique selon la revendication 2, **caractérisé en ce que** ce poly(méth)acrylate présente
- 10 à 60% en poids d'au moins un (méth)acrylate présentant des radicaux alkyle constitués par 9 à 12 atomes de carbone,
- 10 à 60% en poids d'au moins un (méth)acrylate présentant des radicaux alkyle constitués par 12 à 40 atomes de carbone,
la somme de tous les monomères de (méth)acrylate présentant des radicaux alkyle constitués par 8 à 40 atomes de carbone valant au maximum 90% en poids, et
- 10 à 50% en poids d'au moins une α-oléfine présentant des radicaux alkyle constitués par 4 à 14 atomes de carbone.

4. Thermoplastique selon la revendication 1, **caractérisé en ce qu'**il s'agit, pour l'additif, d'un poly(méth)acrylate
et **en ce que** ce poly(méth)acrylate présente 10 à 100% en poids d'au moins un (méth)acrylate présentant des radicaux alkyle constitués par 9 à 20 atomes de carbone, 10 à 80% en poids des radicaux alkyle étant ramifiés.

5. Thermoplastique selon la revendication 4, **caractérisé**
**en ce que** ce poly(méth)acrylate présente jusqu'à 100% en poids d'au moins un (méth)acrylate présentant des radicaux alkyle constitués par 10 à 16 atomes de carbone, 10 à 80% en poids des radicaux alkyle étant ramifiés et en ce que le poly(méth)acrylate présente un poids moléculaire entre 5000 et 15 000.

6. Thermoplastique selon au moins l'une quelconque des revendications 1 à 3, **caractérisé en ce qu'**il s'agit, pour l'additif, d'un poly(méth)acrylate présentant une température de transition vitreuse entre -100 et 0°C, et **en ce que** ce poly(méth)acrylate présente
- 20 à 50% en poids d'au moins un (méth)acrylate présentant des radicaux alkyle constitués par 8 à 12 atomes de carbone,
- 30 à 50% en poids d'au moins un (méth)acrylate présentant des radicaux alkyle constitués par 12 à 40 atomes de carbone,
- 15 à 40% en poids d'au moins une α-oléfine présentant des radicaux alkyle constitués par 4 à 14 atomes de carbone.

7. Thermoplastique selon au moins l'une quelconque des revendications 1 à 4, **caractérisé en ce que** l'additif présente un poids moléculaire moyen (M_{w}) entre 5000 et 75 000.

8. Thermoplastique selon la revendication 7, **caractérisé en ce que** l'additif présente un poids moléculaire moyen (M_{w}) entre 8000 et 40 000.

9. Thermoplastique selon au moins l'une quelconque des revendications 1 à 8, **caractérisé en ce qu'**il s'agit, pour l'additif, d'un lubrifiant et **en ce que** le lubrifiant présente une viscosité cinématique KV100 d'au moins 30 mm²/s, mesurée à 100°C selon la norme ASTM D 445.

10. Thermoplastique selon au moins l'une quelconque des revendications 1 à 4, **caractérisé en ce que** l'additif contient en outre entre 0,1 et 20,0% en poids d'un ou de plusieurs acrylates, qui présentent un radical alkyle constitué par 1 à 7 atomes de carbone et qui présenteraient, sous forme d'homopolymère, à chaque fois une température de transition vitreuse inférieure à 0°C et/ou contient en outre entre 0,1 et 20,0% en poids d'un ou de plusieurs méthacrylates qui présentent un radical alkyle constitué par 1 à 7 atomes de carbone.

11. Thermoplastique selon au moins l'une quelconque des revendications 1 à 10, **caractérisé en ce qu'**il s'agit, pour le thermoplastique, de poly(chlorure de vinyle).

12. Thermoplastique selon au moins l'une quelconque des revendications 1 à 11, **caractérisé en ce que** l'additif présente en outre 0,1 à 10% en poids d'adjuvants de polymérisation et/ou d'additifs.

13. Thermoplastique selon au moins l'une quelconque des revendications 1 à 12, **caractérisé en ce que** le thermoplastique présente 0,05 à 10% en poids de l'additif.

14. Thermoplastique selon la revendication 13, **caractérisé en ce que** le thermoplastique ne présente que l'additif selon au moins l'une quelconque des revendications 1 à 12.

15. Thermoplastique selon la revendication 13 ou 14, **caractérisé en ce que** le thermoplastique contient en outre, au total, jusqu'à 60% en poids de charges, de fibres de carbone, de fibres de verre et/ou d'autres additifs.

16. Procédé pour l'adjonction d'additif à un thermoplastique, **caractérisé en ce que** 0,05 à 10% en poids d'un additif selon au moins l'une quelconque des revendications 1 à 13 sont mélangés avec le thermoplastique dans une extrudeuse.

17. Procédé selon la revendication 16, **caractérisé en ce que** l'additif est introduit dans l'extrudeuse sous forme d'un lot maître.
